# FASCICULE DE BREVET EUROPEEN

(11) **EP 2 496 355 B1**
(45) Date de publication et mention de la délivrance du brevet: **18.02.2015**
(21) Numéro de dépôt: 10771790.2
(22) Date de dépôt: 04.11.2010
(51) Int. Cl.: B04B 9/10, B04B 7/02, B04B 7/06, B04B 13/00, F16D 1/116, F16D 1/06

(54) **CENTRIFUGEUSE INTÉGRANT DES MOYENS TACHYMÉTRIQUES MONTÉS DANS UNE PARTIE SUPÉRIEURE DE L'ENCEINTE, EN PARTICULIER MONTÉS SUR LE COUVERCLE**
ZENTRIFUGE MIT, IM OBEREN TEIL DES GEHÄUSES, INTEGRIERTE GESCHWINDIGKEITSMESSVORRICHTUNG, INSBESONDERE IM DECKEL.
CENTRIFUGE WITH SPEED MEASURING MEANS INTEGRATED IN THE UPPER PART OF THE VESSEL, PARTICULARLY IN THE COVER

(30) Priorité: 04.11.2009 FR 0905280
(43) Date de publication de la demande: 12.09.2012
(73) Titulaire: Awel International, 44130 Blain (FR)
(72) Inventeur: LE GUYADER, Philippe, 44130 Blain (FR); FONDIN, Jean-Louis, F-44410 Saint Lyphard (FR); BOUCARD, Franck, F-85300 Challans (FR)
(74) Mandataire: Saint-Marc-Etienne, Christophe Andréas
(86) Numéro de dépôt international: PCT/EP2010/066809
(87) Numéro de publication internationale: WO 2011/054901

(56) Documents cités:
- EP-A1- 0 685 266
- EP-A1- 0 911 080
- EP-A1- 1 090 688
- DE-A1- 2 559 343
- US-A1- 2002 147 096

## Description

Le domaine de l'invention est celui de la conception et de la fabrication des équipements de centrifugation. Plus précisément, l'invention concerne les centrifugeuses utilisées dans les domaines biologiques pour centrifuger les produits contenus dans des récipients disposés dans des logements aménagés dans le rotor ou portés par celui-ci.

De façon classique, une centrifugeuse comprend :
- un arbre d'entraînement, un rotor destiné à être monté de façon amovible sur l'arbre d'entraînement dans une position de montage pour laquelle l'arbre d'entraînement et le rotor sont accouplés en rotation ;
- un dispositif de blocage axial du rotor sur l'arbre d'entraînement, comprenant un élément mâle porté par le rotor, sollicité élastiquement et susceptible d'occuper une position de coopération avec un élément présenté par l'arbre d'entraînement.

De façon classique, les centrifugeuses comprennent une enceinte incluant une cuve dans laquelle est disposé le rotor constituant l'élément tournant de la centrifugeuse.

En outre, un couvercle est monté pivotant sur l'enceinte autour d'un axe s'étendant en partie arrière du couvercle, ce dernier étant susceptible de pivoter entre une position d'ouverture donnant accès à l'intérieur de la cuve et une position de fermeture dans laquelle il recouvre hermétiquement la cuve.

En position de fermeture, le couvercle est maintenu par des moyens de verrouillage destinés à assurer le maintien du couvercle en position fermé pendant tout le cycle de centrifugation.

De façon classique également, les centrifugeuses intègrent des moyens tachymétriques permettant d'obtenir la vitesse de rotation de l'élément tournant constitué par le rotor. Ces données de vitesse de rotation sont essentielles au fonctionnement de la centrifugeuse, pour asservir la vitesse de rotation des moyens moteurs en fonction du cycle de centrifugation souhaité.

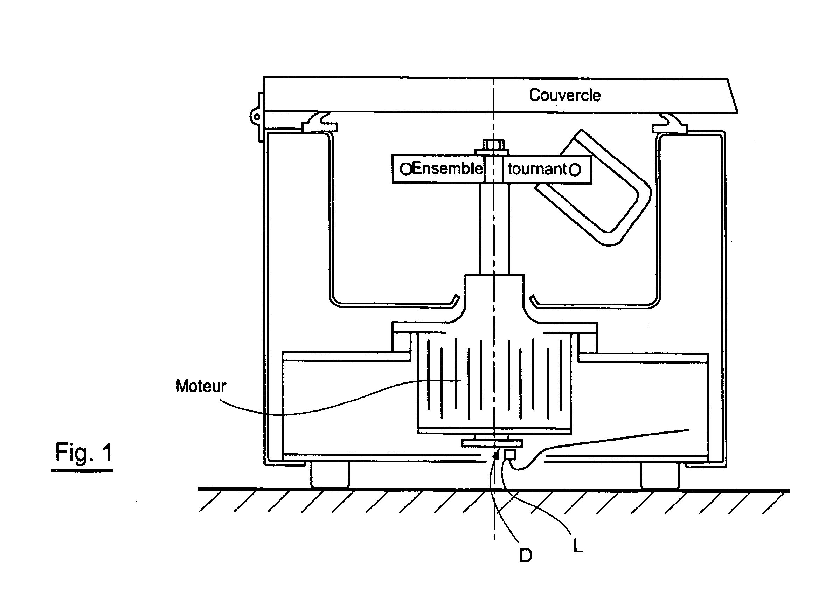

En référence à la figure 1, une technique traditionnelle pour obtenir la vitesse de rotation du rotor consiste à intégrer des moyens tachymétriques, constitués généralement par un tachymètre optique, en fond de l'enceinte de la centrifugeuse. Selon cette technique, le disque D est solidaire en rotation du moteur de la centrifugeuse, ce disque présentant un repère cible, et un moyen de lecture optique L apte à détecter la fréquence de passage du repère cible de façon à en déduire une vitesse de rotation du disque, permettant de contrôler ensuite la vitesse de rotation du moteur et, indirectement, celle de l'élément tournant.

Une alternative pour l'intégration des moyens tachymétriques est divulguée par le document EP 0 685 266 A1. Celui-ci décrit une centrifugeuse selon le préambule de la revendication 1.

Cette technique classique de l'art antérieur implique plusieurs inconvénients.

En premier lieu, il est nécessaire de prévoir bien évidemment un espace dans l'enceinte de la centrifugeuse pour intégrer les moyens tachymétriques. Or, cet espace, dans la pratique, représente une hauteur non négligeable qui impacte la hauteur globale de l'enceinte et donc de la centrifugeuse.

Pourtant, il est souhaitable de limiter tant que faire se peut la hauteur d'une centrifugeuse. En effet, les centrifugeuses sont le plus souvent installées sur des paillasses de hauteur standard et l'accès à l'intérieur de la cuve de la centrifugeuse, pour disposer dans celle-ci des échantillons et retirer ces mêmes échantillons de la cuve, se fait par la partie supérieure de la centrifugeuse, après ouverture du couvercle. On comprend donc que la hauteur de l'enceinte de la centrifugeuse doit être prise en compte pour permettre à un opérateur de taille moyenne d'effectuer cette manipulation avec une certaine commodité.

Un autre inconvénient de la technique de l'art antérieur réside dans l'accessibilité des moyens tachymétriques, que ce soit au moment de leur montage, leur réglage ou de leur maintenance.

Par ailleurs, dans les centrifugeuses actuelles, le rotor est monté de façon amovible sur l'arbre d'entraînement relié au moteur de la centrifugeuse.

Ces rotors subissent des contraintes considérables lors de chaque cycle de centrifugation. De ce fait, ils ont une durée de vie limitée, au-delà de laquelle ils présentent un risque de rupture et peuvent, si cette rupture survient lors d'un cycle de centrifugation, engendrer des dommages importants pour l'appareil lui-même, voire pour des biens et personnes au voisinage de l'appareil.

Aussi, les fabricants de rotor estiment de façon empirique la durée de vie des rotors, cette durée étant déterminée pour un nombre de cycles moyens. Il revient donc aux opérateurs de vérifier périodiquement que cette durée de vie n'est pas atteinte pour un rotor donné.

Bien entendu, une telle pratique est sujette à interprétation ou à omission et peut, par conséquent, conduire à l'utilisation d'un rotor qui peut ne plus être viable.

Un autre problème du montage amovible des rotors sur l'arbre d'entraînement de la centrifugeuse réside dans la fiabilité du blocage axial du rotor sur l'arbre d'entraînement. En effet, un blocage axial insuffisant peut, lors du fonctionnement de la centrifugeuse, engendrer un risque important d'accidents dû à un détachement fortuit du rotor.

En pratique, l'opérateur doit réaliser le montage du rotor sur l'arbre d'entraînement avec une grande attention et une bonne précision pour s'assurer que le blocage axial soit obtenu avec la plus grande efficacité possible.

Toutefois, avec les solutions actuelles, l'opérateur est régulièrement en proie au doute s'agissant du montage correct du rotor sur l'arbre d'entraînement. Or, l'opération de montage du rotor sur l'arbre d'entraînement, à l'intérieur de la cuve de la centrifugeuse, peut s'avérer d'autant plus malaisé que l'accès en hauteur à l'intérieur de la cuve est incommode.

L'invention a notamment pour objectif de pallier les inconvénients de l'art antérieur.

Un objectif général de l'invention est de proposer une centrifugeuse qui facilite les opérations d'installation du rotor dans la cuve de la centrifugeuse.

Plus précisément, l'invention a pour objectif de proposer une centrifugeuse dont l'encombrement en hauteur est réduit par rapport aux centrifugeuses de l'art antérieur.

L'invention a également pour objectif de fournir une telle centrifugeuse qui soit équipée de moyens tachymétriques simples à installer et dont la maintenance peut être réalisée aisément.

L'invention a aussi pour objectif de fournir une telle centrifugeuse qui permette d'offrir à un opérateur une garantie du bon montage du rotor sur l'arbre d'entraînement.

Un autre objectif de l'invention est de proposer une centrifugeuse qui offre des garanties à un opérateur s'agissant du bon usage d'un rotor par rapport à sa durée de vie.

Ces objectifs, ainsi que d'autres qui apparaîtront par la suite sont atteints grâce à l'invention qui a pour objet une centrifugeuse conforme à la revendication 1.

Ainsi, l'invention propose une approche nouvelle du montage et de l'intégration des moyens tachymétriques, selon laquelle ces moyens ne sont plus montés en fond d'enceinte comme c'est le cas avec les solutions de l'art antérieur, mais en partie supérieure de l'enceinte de la centrifugeuse.

On évite de cette façon de devoir rehausser le bloc moteur par rapport au fond de l'enceinte, ce qui est nécessaire selon les techniques traditionnelles pour ménager un espace suffisant dans lequel vient s'inscrire le disque couplé à l'axe moteur et le moyen de lecture optique intercalé entre ce disque et le fond de l'enceinte.

Selon l'invention, on utilise le rotor directement comme support de l'élément cible des moyens tachymétriques. Ceci évite de devoir ajouter et « empiler » un organe tournant (le disque) qui impose de devoir réserver dans l'enceinte un espace en hauteur.

Avec l'agencement proposé par l'invention, on peut donc améliorer la compacité en hauteur de la centrifugeuse, ceci se traduisant par une diminution de l'ordre de 30 à 40 mm de la hauteur de la centrifugeuse.

De plus, la disposition en partie supérieure de l'enceinte des moyens tachymétriques permet de faciliter leur installation et leur maintenance, comparée à une disposition en fond d'enceinte de centrifugeuse.

Selon un mode de réalisation préférentiel, ladite deuxième partie est montée sur ledit couvercle.

Un tel mode de réalisation s'avère particulièrement avantageux. En effet, la deuxième partie, constituant la partie « lectrice » de la fréquence de passage de la partie « émettrice » portée par le rotor, peut ainsi être amenée dans une position escamotée correspondant à la position ouverte du couvercle. En d'autres termes, l'espace en hauteur devant être réservé pour cette deuxième partie des moyens tachymétriques est compris dans l'épaisseur du couvercle qui, lorsqu'il est en position d'ouverture, n'impacte pas en hauteur l'accessibilité à la cuve de la centrifugeuse.

Selon une autre caractéristique, ledit ensemble tournant porte des moyens de mémorisation de données relatives à son historique de fonctionnement.

De cette façon, il est possible d'obtenir des données précises sur le nombre de cycles effectués par le rotor, et donc d'obtenir une traçabilité concernant l'utilisation de ce rotor, ceci en vue de détecter si le rotor atteint ou pas le nombre de cycles maximum défini par le constructeur.

Dans ce cas, ladite enceinte porte avantageusement des moyens de lecture desdits moyens de mémorisation portés par ledit ensemble tournant.

Ainsi, il est possible de programmer la centrifugeuse de telle sorte que celle-ci, ayant été paramétrée avec des données relatives au nombre de cycles maximum pour un rotor, interdit le lancement d'un cycle de centrifugation si ce nombre maximum de cycle est atteint pour un rotor donné.

Préférentiellement, ladite enceinte porte des moyens d'émission de données destinés à être enregistrés par lesdits moyens de mémorisation.

Ainsi, l'historique de fonctionnement enregistré dans les moyens de mémorisation du rotor s'incrémente automatiquement des données de fonctionnement fournies par la centrifugeuse elle-même.

Selon un mode de réalisation préféré, lesdits moyens d'émission sont aptes à émettre sans contact des données destinées à être enregistrées par lesdits moyens de mémorisation.

Avantageusement, ledit couvercle porte des moyens d'émission/réception aptes à coopérer avec lesdits moyens de mémorisation portés par ledit rotor. Selon le principe de l'invention, ces moyens de mémorisation sont constitués par la puce RFID portée par le rotor.

Selon une solution avantageuse, ladite puce occupe préférentiellement une position centrale sur ledit rotor.

Une telle position centrale de la puce RFID sur le rotor limite les effets de la force centrifuge (extrêmement importante au cours d'un cycle de centrifugation) sur la puce RFID, préservant ainsi celle-ci tant d'un point de vue mécanique que électronique.

Selon encore une autre caractéristique avantageuse de l'invention, la centrifugeuse comprend un dispositif de blocage axial d'un ensemble tournant sur un arbre d'entraînement relié auxdits moyens moteurs, ledit dispositif de blocage comprenant au moins un élément mâle porté par ledit ensemble tournant et susceptible d'occuper une position de coopération avec un élément femelle présenté par ledit arbre d'entraînement, et comprend en outre des moyens de détection du positionnement axial du rotor sur ledit arbre d'entraînement dans une position correspondante à ladite position de coopération dudit élément mâle avec ledit élément femelle.

De cette façon, l'opérateur dispose d'une assistance à la vérification du montage correct du rotor sur l'arbre d'entraînement.

Dans ce cas, ledit ensemble tournant porte un organe cible et ladite enceinte porte un moyen de repérage dudit organe cible.

Préférentiellement, ledit moyen de repérage est porté par ledit couvercle.

On note qu'une centrifugeuse selon l'invention se caractérise ainsi de manière générale par la mise en oeuvre d'un couvercle « technique intelligent », dans la mesure où celui-ci ne constitue plus un simple élément d'ouverture/fermeture, mais un organe susceptible d'exercer des fonctions complexes liées notamment à :
- la mesure de la vitesse de rotation de l'ensemble tournant ;
- la détection de l'emplacement correct en hauteur du rotor sur l'arbre d'entraînement ;
- l'échange de données relatives à l'historique de fonctionnement du rotor.

Selon encore une autre caractéristique avantageuse de l'invention, ladite cuve présente à sa base une concavité dans laquelle vient se loger une partie supérieure des moyens moteurs.

Un tel agencement permet d'obtenir une diminution supplémentaire en hauteur de la centrifugeuse, de l'ordre de 15 à 20 mm.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation schématique d'une centrifugeuse selon l'art antérieur ;
- les figures 3 et 4 sont des vues d'ensemble d'une centrifugeuse selon l'invention, respectivement avec et sans le rotor ;
- la figure 4 est une vue en coupe d'une centrifugeuse selon l'invention ;
- la figure 5 est une vue de détails de la figure 4 ;
- la figure 6 est une vue partielle du couvercle et des moyens de blocage axial du rotor sur l'arbre d'entraînement d'une centrifugeuse selon l'invention ;
- la figure 7 est une autre vue partielle du couvercle et des moyens de blocage axial du rotor sur l'arbre d'entraînement d'une centrifugeuse selon l'invention ;
- les figures 8 et 9 sont des vues de dessus des moyens de blocage axial du rotor sur l'arbre d'entraînement d'une centrifugeuse selon l'invention, respectivement en position de verrouillage et en position de déverrouillage ;
- les figures 10 et 11 illustrent des courbes de signaux détectés par les moyens tachymétriques d'une centrifugeuse selon l'invention, respectivement en position de verrouillage et en position de déverrouillage des moyens de blocage axial du rotor sur l'arbre d'entraînement.

Tel qu'indiqué précédemment, le principe de l'invention réside dans le fait de proposer une centrifugeuse dans laquelle les moyens permettant de mesurer la vitesse de rotation du rotor sont montés en partie supérieure de l'enceinte de la centrifugeuse. De plus, la mise en oeuvre d'une puce RFID montée sur le rotor permet de mémoriser et d'exploiter des données relatives notamment à l'historique de fonctionnement du rotor.

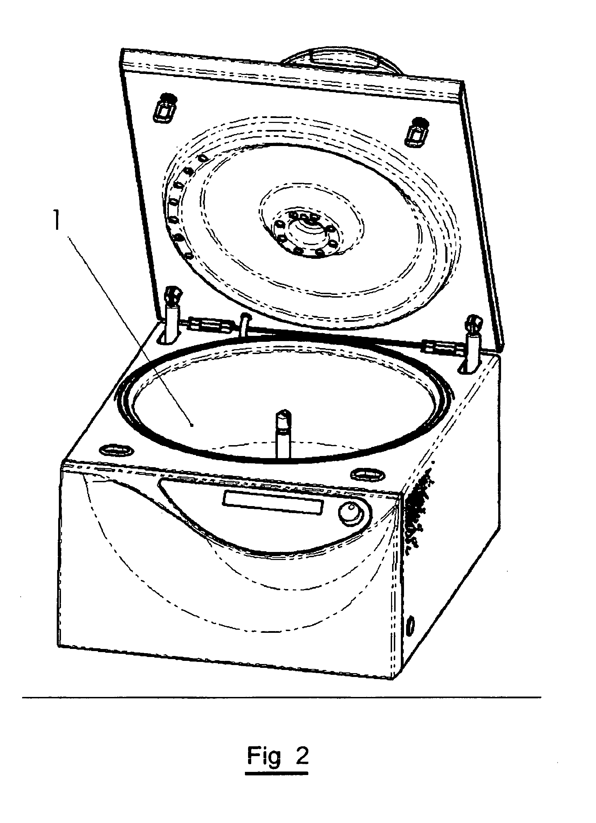

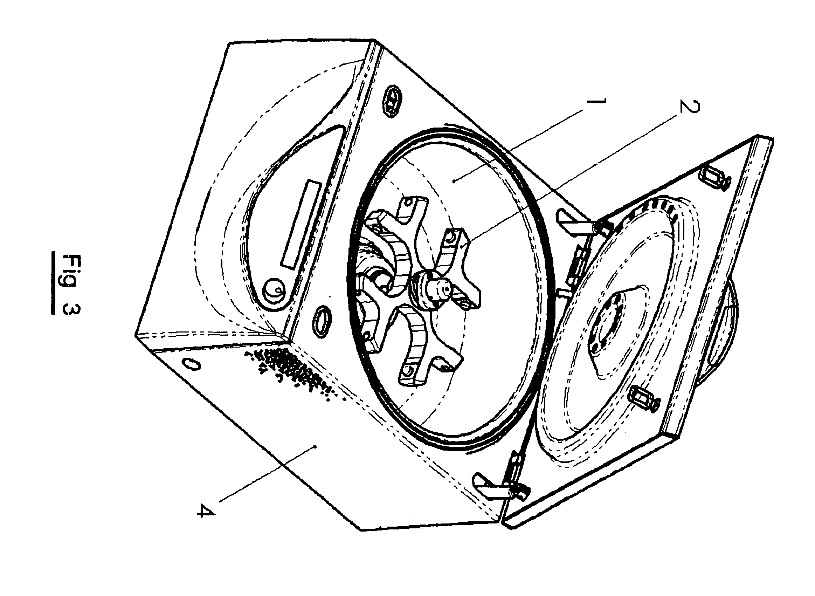

En référence aux figures 2 à 4, une centrifugeuse selon l'invention comprend de façon classique en soi une cuve 1 intégrant :
- un bloc moteur 100 relié à un arbre d'entraînement 101 ;
- un rotor 2 monté de façon amovible sur l'arbre d'entraînement 101, dans une position de montage pour laquelle l'arbre d'entraînement et le rotor sont accouplés en rotation ;
- un dispositif 3 assurant un blocage axial du rotor sur l'arbre d'entraînement.

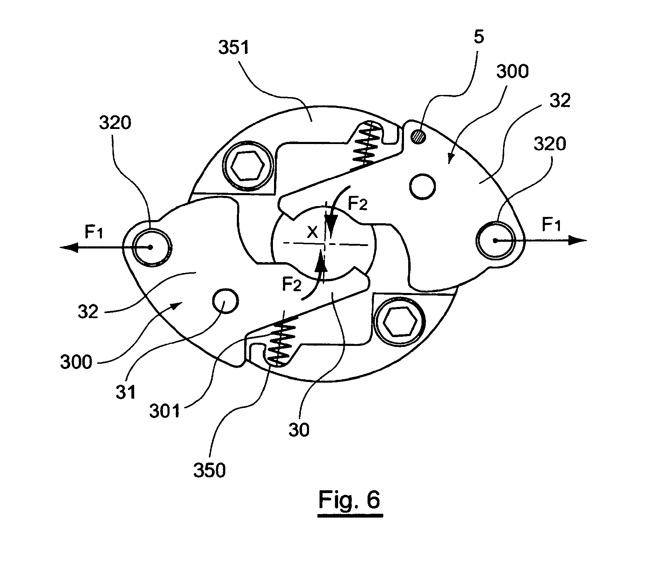

Selon le présent mode de réalisation, le blocage axial du rotor sur l'arbre d'entraînement est obtenu par la mise en oeuvre de :
- une gorge annulaire 1010 ménagée sur l'arbre d'entraînement, constituant un élément femelle présenté par l'arbre d'entraînement ;
- une paire d'éléments mâles 300 (figure 6), portés par le rotor et susceptibles d'occuper une position de coopération avec la gorge annulaire 1010 en étant engagés dans celle-ci sous l'action d'une sollicitation élastique.

Tel que cela apparaît sur la figure 6, le dispositif 3 comprend une paire d'éléments mâles 300 montés chacun pivotant autour d'un axe de pivotement 31, l'axe de pivotement 31 de chaque élément mâle étant monté sur une bague 35 encastrée dans un logement 20 ménagé sur la partie supérieure du rotor 2.

Les éléments mâles 300 sont montés de façon diamétralement opposée par rapport à l'axe X sur la bague 35. Il en est donc de même de la position diamétralement opposée des axes de pivotement 31.

De plus, chaque élément mâle 300 est sollicité élastiquement par un ressort 301, dont une extrémité prend appui sur un élément mâle et l'autre extrémité est logée dans une cavité 350 de la bague 35, ce ressort 301 étant conçu et monté de façon à agir en compression de telle sorte que chaque ressort 301 tend à faire pivoter l'élément mâle correspondant en direction de sa position de coopération avec la gorge annulaire 1010 de l'arbre d'entraînement 101.

Plus précisément, chaque élément mâle 300 comprend :
- une terminaison d'engagement 30, s'étendant d'un côté de l'axe de pivotement 31, et contre laquelle le ressort 301 vient prendre appui, cette terminaison d'engagement 30 étant destinée à venir s'engager dans la gorge annulaire 10 de l'arbre d'entraînement pour assurer le blocage axial du rotor sur l'arbre d'entraînement ;
- une oreillette 32 s'étendant de l'autre côté de l'axe de pivotement par rapport à la terminaison d'engagement, cette oreillette constituant des moyens d'indication visuelle et/ou tactile comme expliqué par la suite.

On note que le débattement angulaire de la terminaison d'engagement 30 de chaque élément mâle 300, dans la direction selon laquelle la terminaison est excentrée par rapport à l'axe X, et limitée par un épaulement 351 ménagé sur la bague 35.

Parallèlement, les épaulements 351 diamétralement opposés ménagent entre eux un espace dans lesquels s'étendent les oreillettes 32, cet espace entre les épaulements étant également conçus pour permettre un débattement angulaire des oreillettes 32.

En outre, le rotor 2 porte une cage annulaire 33 destinée à être rapportée et fixée sur la bague 35, cette cage annulaire 33 délimitant un volume formant logement pour les éléments mâles 300.

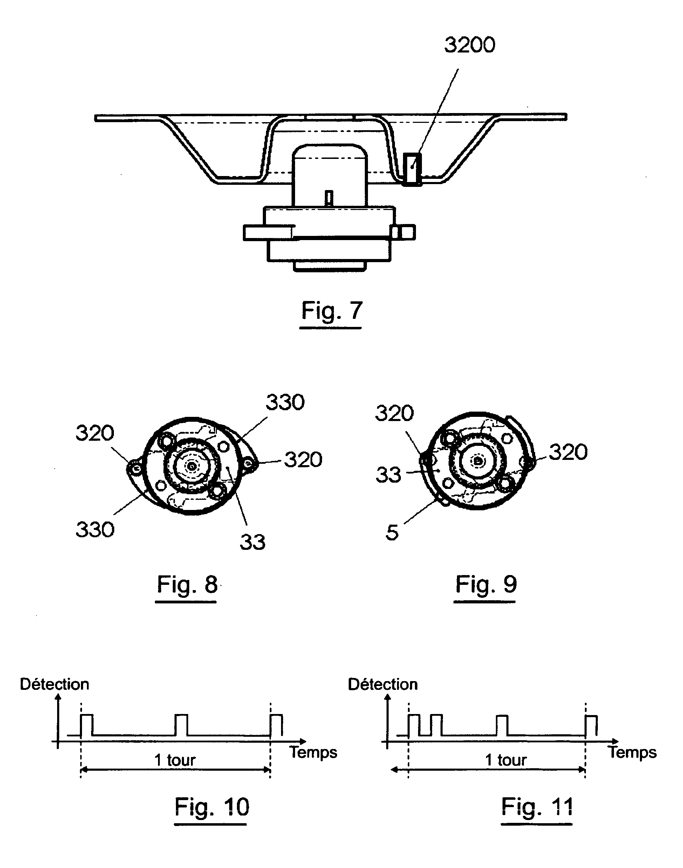

De plus, la cage annulaire 33 est pourvue d'un passage radial 330 pour chaque oreillette 32. Ces passages radiaux 330 et le dimensionnement du diamètre de la cage annulaire 33 sont conçus de façon à autoriser deux positions des moyens d'indication visuelle et/ou tactile constitués par les oreillettes 32, à savoir :
- une position d'occultation, selon laquelle les oreillettes sont logées intégralement à l'intérieur de la cage annulaire, les oreillettes n'étant donc pas visibles, ni accessibles (ou quasiment) au toucher dans cette position (figure 9) ;
- une position d'indication du blocage axial du rotor sur l'arbre d'entraînement, selon laquelle les oreillettes font saillie au travers des passages 330 de la cage annulaire 33, les oreillettes étant alors présentées à l'extérieur de la cage annulaire de façon à être visible et accessible au toucher (tel que cela apparaît sur la figure 8).

Pour augmenter encore le caractère visible des oreillettes lorsque celles-ci sont présentées en saillie au travers des passages radiaux 330 de la cage annulaire, un témoin 320 de couleur (par exemple de couleur verte) est rapportée sur la face supérieure de chaque oreillette 32.

Pour procéder au montage du rotor sur l'arbre d'entraînement, l'opérateur engage le rotor sur l'arbre d'entraînement jusqu'à ce que les éléments mâles 300 parviennent au niveau de la gorge annulaire 1010 de l'arbre d'entraînement. A ce stade, sous l'action des ressorts 301, les terminaisons d'engagement 30 pénètrent la gorge annulaire de l'arbre d'entraînement. La simple mise en correspondance axiale de la position des éléments mâles avec l'emplacement de la gorge annulaire de l'arbre d'entraînement suffit à engendrer le pivotement des éléments mâles autour de leur axe de pivotement, tel qu'indiqué par la flèche F2 sur la figure 6.

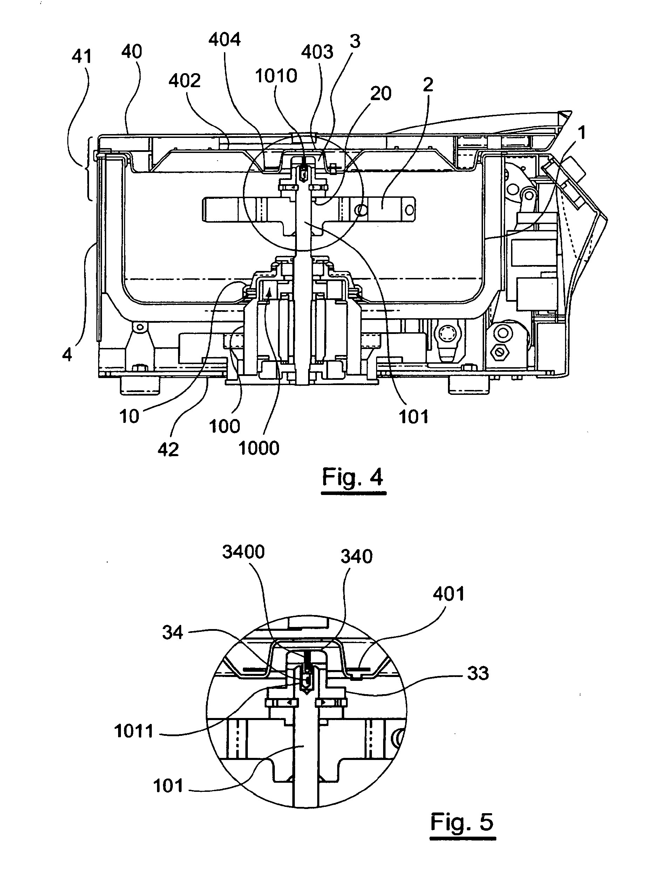

Par ailleurs, la centrifugeuse comprend :
- une enceinte 4 délimitant un volume dans lequel est intégrée la cuve 1 ;
- un couvercle 40 monté pivotant autour d'un axe s'étendant en partie arrière du couvercle, ce couvercle étant mobile entre une position d'ouverture (figure 2) permettant l'accès à la cuve 1 et une position de fermeture (figure 4).

L'enceinte 4 de la centrifugeuse s'étend verticalement entre un fond 42 et une partie supérieure 41 incluant le couvercle 40, cette partie supérieure incluant également par conséquent l'axe de pivotement du couvercle.

Par ailleurs, selon le principe de l'invention, la centrifugeuse comprend en outre des moyens de mesure de la vitesse de rotation de la centrifugeuse, ces moyens comprenant :
- une première partie dite émettrice portée par le rotor 2 ;
- une deuxième partie apte à détecter une fréquence de passage de la partie émettrice en un point fixe, cette deuxième partie étant montée sur la partie supérieure 41 de l'enceinte, et préférentiellement sur le couvercle 40 de la centrifugeuse.

Ces première et deuxième parties constituent des moyens tachymétriques permettant d'obtenir la vitesse de rotation de l'ensemble tournant constitué par le rotor.

Selon le présent mode de réalisation, la partie émettrice portée par le rotor est constituée par les témoins 320, ceux-ci étant chacun un aimant. En parallèle, la deuxième partie apte à détecter une fréquence de passage de la partie émettrice est un capteur à effet radio-magnétique 3200 porté par le couvercle (ce capteur étant donc en un point fixe de la centrifugeuse une fois le couvercle fermé).

De plus, selon un autre aspect de l'invention illustré par les figure 6 à 10, l'un des éléments mâle 300 du dispositif de blocage axial 3 porte un organe cible 5 tandis que l'enceinte, et préférentiellement le couvercle selon le présent mode de réalisation, porte un moyen de repérage de l'organe cible 5, cet ensemble étant prévu pour former des moyens de détection du positionnement axial du rotor sur l'arbre d'entraînement dans la position correspondante à la position de coopération dudit élément mâle avec la gorge annulaire 1011 de l'arbre d'entraînement 101.

Cet organe cible est constitué selon le présent mode de réalisation par un aimant 5 monté une extrémité de l'oreillette 32 correspondante opposée à l'extrémité recevant le témoin 320 par rapport à l'axe de pivotement 31. On note que, selon cette disposition, lorsque le dispositif de blocage axial est en position déverrouillée, l'aimant 5 est présenté à l'extérieur de la cage annulaire 33 (figure 9) tandis que, inversement, lorsque le dispositif de blocage axial est en position verrouillée, l'aimant 5 est occulté à l'intérieur de la cage annulaire 33 (figure 8).

Ainsi, lorsque le rotor tourne et que le dispositif de blocage axial est en position verrouillé (figure 8), le capteur à effet radio-magnétique 3200 va émettre une courbe du type de celle illustrée par la figure 10 : deux signaux régulièrement espacés correspondant aux passages des témoins 320 sous le capteur à effet radio-magnétique 3200.

En revanche, lorsque le rotor tourne et que le dispositif de blocage axial n'est pas en position verrouillée (figure 9), le capteur à effet radio-magnétique 3200 va émettre une courbe du type de celle illustrée par la figure 11 : trois signaux correspondant aux passages des témoins 320 et à celui de l'aimant 5, sous le capteur à effet radio-magnétique 3200, ces signaux étant espacés de façon irrégulière deux à deux (l'aimant 5 étant plus rapproché d'un des témoins que de l'autre). Dans ce cas, la courbe est interprétée comme représentative d'une position non verrouillée du rotor sur l'arbre d'entraînement et le cycle de centrifugation est immédiatement stoppé.

Par ailleurs, les moyens d'accouplement en rotation du rotor avec l'arbre d'entraînement comprennent :
- d'une part une fente diamétrale 1011 s'étendant à partir de l'extrémité supérieure de l'arbre d'entraînement 101 ;
- une goupille diamétrale 34 solidaire du rotor destinée à venir se loger dans la fente diamétrale 1011 de l'arbre d'entraînement pour assurer le couplage en rotation du rotor avec l'arbre d'entraînement.

Parallèlement, le rotor 2 porte une cage annulaire 33 destinée à être rapportée et fixée sur la base 35, cette cage annulaire 33 délimitant un volume formant logement pour les éléments mâles 300.

La goupille diamétrale 34 est montée à force dans une coiffe 340 surplombant la cage annulaire 33.

Selon le principe de l'invention, une puce RFID 3400, portée par le rotor, est montée à l'intérieur de la coiffe 340, cette puce s'étendant selon le présent mode de réalisation selon l'axe de cette coiffe, de façon à occuper une position centrale sur le rotor.

Cette puce RFID constitue des moyens de mémorisation de données relatives à l'historique de fonctionnement du rotor. La partie supérieure de l'enceinte, et plus précisément le couvercle selon le présent mode de réalisation, présente des moyens d'émission/réception 401 destinés à coopérer avec la puce RFID portée par le rotor.

Les moyens d'émission/réception constituent ainsi des moyens de lecture (pour la partie réception) des données mémorisées par la puce RFID, et les moyens d'émission de données destinés à être enregistrés par la puce RFID.

Par ailleurs, les moyens d'émission/réception 401 permettent de coopérer sans contact avec la puce RFID, pour l'échange de données avec celle-ci.

Bien entendu, la centrifugeuse intègre les moyens d'exécution d'un programme permettant de :
- mémoriser des données relatives au nombre de cycle maximal qu'un type de rotor peut exécuter sans risque ;
- traduire des paramètres de cycles de centrifugation sous forme de données destinées à être émises vers la puce RFID du rotor et à être mémorisés par celle-ci ;
- recevoir des données mémorisées par la puce RFID, traiter celles-ci et les comparer aux données relatives au nombre de cycles maximal pour un rotor donné de façon à interdire le lancement d'un cycle de centrifugation si les données mémorisées par la puce RFID concernant l'historique de fonctionnement indiquent que ce nombre maximal est atteint.

On note que la face interne 402 du couvercle 40 présente en son centre une concavité 403 prévue pour former un logement dans lequel vient s'inscrire la coiffe 340 du rotor en position de fermeture du couvercle.

En outre, cette concavité 403 est entourée par une zone annulaire 404, dans laquelle sont montés les moyens d'émission/réception 401.

Par ailleurs, on note que la cuve 1 présente à sa base une concavité 10 dans laquelle vient se loger une partie supérieure 1000 des moyens moteurs 100.

L'enceinte de la centrifugeuse intègre en outre des moyens amortisseurs associés aux moyens moteurs.

## Revendications

1. Centrifugeuse comprenant une enceinte (4) incluant une cuve (1) dans laquelle sont montés des moyens moteurs destinés à entraîner en rotation un ensemble tournant, et des moyens de mesure de la vitesse de rotation dudit ensemble tournant, ladite enceinte s'étendant verticalement entre le fond et une partie supérieure incluant un couvercle (40) d'ouverture/fermeture, lesdits moyens de mesure de la vitesse de rotation étant du type comprenant une partie dite émettrice (320) entraînée en rotation par lesdits moyens moteurs et une deuxième partie apte à détecter une fréquence de passage de ladite partie émettrice en un point fixe,
ladite partie émettrice étant portée par ledit ensemble tournant **caractérisée en ce que** ladite deuxième partie est montée sur ladite partie supérieure, ledit ensemble tournant portant une puce RFID (3400) et ladite enceinte portant des moyens d'émission/réception (401) aptes à coopérer avec ladite puce RFID.

2. Centrifugeuse selon la revendication 1, **caractérisée en ce que** ladite deuxième partie est montée sur ledit couvercle.

3. Centrifugeuse selon l'une des revendications 1 et 2, **caractérisée en ce que** ledit ensemble tournant porte des moyens de mémorisation de données relatives à son historique de fonctionnement.

4. Centrifugeuse selon la revendication 3, **caractérisée en ce que** ladite enceinte porte des moyens de lecture desdits moyens de mémorisation portés par ledit ensemble tournant.

5. Centrifugeuse selon la revendication 3, **caractérisée en ce que** ladite enceinte porte des moyens d'émission de données destinés à être enregistrées par lesdits moyens de mémorisation.

6. Centrifugeuse selon la revendication 5, **caractérisée en ce que** lesdits moyens d'émission sont aptes à émettre sans contact des données destinées à être enregistrées par lesdits moyens de mémorisation.

7. Centrifugeuse selon l'une quelconque des revendications 3 à 6, **caractérisé en ce que** ledit couvercle porte des moyens d'émission/réception aptes à coopérer avec lesdits moyens de mémorisation portés par ledit rotor.

8. Centrifugeuse selon l'une quelconque des revendications 1 à 7, **caractérisée en ce que** ladite puce occupe une position centrale sur ledit rotor.

9. Centrifugeuse selon l'une quelconque des revendications 1 à 8, comprenant un dispositif de blocage axial d'un ensemble tournant sur un arbre d'entraînement relié auxdits moyens moteurs, ledit dispositif de blocage comprenant au moins un élément mâle porté par ledit ensemble tournant et susceptible d'occuper une position de coopération avec un élément femelle présentée par ledit arbre d'entraînement,
**caractérisée en ce qu'**elle comprend des moyens de détection du positionnement axial du rotor sur ledit arbre d'entraînement dans une position correspondante à ladite position de coopération dudit élément mâle avec ledit élément femelle.

10. Centrifugeuse selon la revendication 9, **caractérisée en ce que** ledit ensemble tournant porte un organe cible et **en ce que** ladite enceinte porte un moyen de repérage dudit organe cible.

11. Centrifugeuse selon la revendication 10, **caractérisée en ce que** ledit moyen de repérage est porté par ledit couvercle.

12. Centrifugeuse selon l'une quelconque des revendications 1 à 11, **caractérisée en ce que** ladite cuve présente à sa base une concavité dans laquelle vient se loger une partie supérieure des moyens moteurs.

## Patentansprüche

1. Zentrifuge, umfassend einen Raum (4), der eine Wanne (1) einschließt, in der Antriebsmittel montiert sind, die dazu bestimmt sind, eine Rotationseinheit in Drehung anzutreiben, und Mittel zum Messen der Drehgeschwindigkeit der Rotationseinheit, wobei sich der Raum vertikal zwischen dem Boden und einem oberen Abschnitt, der einen Deckel (40) zum Öffnen/Schließen umfasst, erstreckt, wobei die Mittel zum Messen der Drehgeschwindigkeit dergestalt sind, dass sie einen so genannten Sendeteil (320) umfassen, der in Drehung von den Antriebsmitteln angetrieben wird, und einen zweiten Teil, der dazu geeignet ist, eine Durchgangsfrequenz des Sendeteils an einem Fixpunkt zu erfassen, wobei der Sendeteil von der Rotationseinheit getragen wird,
**dadurch gekennzeichnet, dass** der zweite Teil auf dem oberen Teil montiert ist, wobei die Rotationseinheit einen RFID-Chip (3400) trägt und der Raum Sende-/Empfangsmittel (401) trägt, die dazu geeignet sind, mit dem RFID-Chip zusammenzuwirken.

2. Zentrifuge nach Anspruch 1, **dadurch gekennzeichnet, dass** der zweite Teil auf dem Deckel montiert ist.

3. Zentrifuge nach einem der Ansprüche 1 und 2, **dadurch gekennzeichnet, dass** die Rotationseinheit Mittel zur Speicherung von Daten bezüglich ihrer Funktionshistorie trägt.

4. Zentrifuge nach Anspruch 3, **dadurch gekennzeichnet, dass** der Raum Mittel zum Lesen der Speichermittel trägt, die von der Rotationseinheit getragen werden.

5. Zentrifuge nach Anspruch 3, **dadurch gekennzeichnet, dass** der Raum Mittel zum Senden von Daten trägt, die dazu bestimmt sind, durch die Speichermittel aufgezeichnet zu werden.

6. Zentrifuge nach Anspruch 5, **dadurch gekennzeichnet, dass** die Sendemittel dazu geeignet sind, kontaktlos Daten zu senden, die dazu bestimmt sind, von den Speichermitteln aufgezeichnet zu werden.

7. Zentrifuge nach einem der Ansprüche 3 bis 6, **dadurch gekennzeichnet, dass** der Deckel Sende-/Empfangsmittel trägt, die dazu geeignet sind, mit den vom Rotor getragenen Speichermitteln zusammenzuwirken.

8. Zentrifuge nach einem der Ansprüche 1 bis 7, **dadurch gekennzeichnet, dass** der Chip eine zentrale Position auf dem Rotor einnimmt.

9. Zentrifuge nach einem der Ansprüche 1 bis 8, umfassend eine Vorrichtung zur axialen Blockierung einer Rotationseinheit auf einer Antriebswelle, die mit den Antriebsmitteln verbunden ist, wobei die Blockiervorrichtung mindestens ein Steckelement umfasst, das von der Rotationseinheit getragen wird und eine Position des Zusammenwirkens mit einem Buchsenelement einnehmen kann, das auf der Antriebswelle vorhanden ist,
**dadurch gekennzeichnet, dass** sie Mittel zur Erfassung der axialen Positionierung des Rotors auf der Antriebswelle in einer Position entsprechend der Position des Zusammenwirkens des Steckelements mit dem Buchsenelement umfasst.

10. Zentrifuge nach Anspruch 9, **dadurch gekennzeichnet, dass** die Rotationseinheit ein Zielelement trägt, und dass der Raum ein Mittel zur Erfassung des Zielelements trägt.

11. Zentrifuge nach Anspruch 10, **dadurch gekennzeichnet, dass** das Erfassungsmittel von dem Deckel getragen wird.

12. Zentrifuge nach einem der Ansprüche 1 bis 11, **dadurch gekennzeichnet, dass** die Wanne an ihrer Basis eine konkave Ausnehmung aufweist, in der ein oberer Teil der Antriebsmittel angeordnet wird.

## Claims

1. Centrifuge comprising a chamber (4) including a vessel (1), in which are mounted motor means intended to rotationally drive a rotating assembly, and means for measuring the speed of rotation of said rotating assembly, said chamber extending vertically between the bottom and an upper part including an opening/closing lid (40), said means for measuring the speed of rotation being of the type comprising a part called a sending part (320) rotationally driven by said motor means and a second part capable of detecting a frequency of passage of said sending part at a fixed point, said sending part being carried by said rotating assembly,
**characterised in that** said second part is mounted on said upper part, said rotating assembly carrying an RFID chip (3400) and said chamber carrying emitting/reception means (401) capable of cooperating with said RFID chip.

2. Centrifuge according to Claim 1, **characterised in that** said second part is mounted on said lid.

3. Centrifuge according to one of Claims 1 and 2, **characterised in that** said rotating assembly carries storage means for storing data relating to its operating history.

4. Centrifuge according to Claim 3, **characterised in that** said chamber carries means for reading said storage means carried by said rotating assembly.

5. Centrifuge according to Claim 3, **characterised in that** said chamber carries emitting means for sending data intended to be recorded by said storage means.

6. Centrifuge according to Claim 5, **characterised in that** said emitting means are capable of contactless emission of data intended to be recorded by said storage means.

7. Centrifuge according to any one of Claims 3 to 6, **characterised in that** said lid carries emitting/reception means capable of cooperating with said storage means carried by said rotor.

8. Centrifuge according to any one of Claims 1 to 7, **characterised in that** said chip occupies a central position on said rotor.

9. Centrifuge according to any one of Claims 1 to 8, comprising a locking device for axial locking of a rotating assembly on a drive shaft connected to said motor means, said locking device comprising at least one male element carried by said rotating assembly and capable of occupying a position of cooperation with a female element presented by said drive shaft, **characterised in that** it comprises means for detecting the axial positioning of the rotor on said drive shaft in a position corresponding to said position of cooperation of said male element with said female element.

10. Centrifuge according to Claim 9, **characterised in that** said rotating assembly carries a target element and **in that** said chamber carries an identifying means for identifying said target element.

11. Centrifuge according to Claim 10, **characterised in that** said identifying means is carried by said lid.

12. Centrifuge according to any one of Claims 1 to 11, **characterised in that** said vessel has, at its base, a concavity in which an upper part of the motor means is housed.
